# EUROPEAN PATENT APPLICATION

(11) **EP 4 458 929 A1**
(43) Date of publication of application: **06.11.2024**
(21) Application number: 23020202.0
(22) Date of filing: 02.05.2023
(51) Int. Cl.: C10J 3/00, C10K 1/00, C10K 1/08, C10K 1/12, C01B 3/52, C01C 1/242

(54) **METHOD OF PRODUCING SYNGAS FROM AN INPUT MATERIAL**

(71) Applicant: Holcim Technology Ltd, 6300 Zug (CH)
(72) Inventor: Suter, Michael, CH-8112 Otelfingen (CH)
(74) Representative: SONN Patentanwälte GmbH & Co KG

(57) **Abstract**

A method of producing syngas from an input material, comprising gasifying the input material in a gasifier to obtain syngas and removing contaminants from the syngas, comprising a first wet scrubbing step for removing tar from the syngas and a second wet scrubbing step for removing ammonia from the syngas, wherein the first scrubbing step comprises feeding the syngas through a washing column of a first scrubber (2) in the presence of a first washing liquid containing at last one solvent and subjecting the first washing liquid to a separating step in a separator (5) downstream of the washing column for separating tar from the first washing liquid, wherein a neutralizing agent (4) is added to the first washing liquid in order to neutralize halogens contained in the syngas and obtain sodium salts dissolving in the first washing liquid, and wherein a partial amount of ammonia contained in the syngas is precipitated into the first washing liquid and a remaining amount of ammonia contained in the syngas is removed from the syngas in the second wet scrubbing step.

## Description

The invention refers to a method of producing syngas from an input material.

Syngas, or synthesis gas, is a mixture of hydrogen and carbon monoxide. Syngas is combustible and can be used as a fuel or input in various applications.

Various methods of producing syngas from biomass or other material have been proposed in order to obtain a carbon neutral fuel, one method being the gasification of biomass or other material. Depending on the composition of the input material, gasification of such material may result in high amounts of contaminants in the syngas, which limits the use of the syngas as a fuel or input stream.

Therefore, methods of purifying syngas have been proposed in order to remove contaminants from the syngas. Such methods comprise a first wet scrubbing step for removing tar from the syngas and a second wet scrubbing step for removing ammonia from the syngas, wherein the first scrubbing step comprises feeding the syngas through a washing column of a first scrubber in the presence of a first washing liquid containing one or two solvents and subjecting the first washing liquid to a separating step in a separator downstream of the washing column for separating tar from the first washing liquid. Such a method has been described in EP 3293159 B1. The purified syngas may be used as fuel for the production of Portland clinker.

However, the process described in EP 3293159 B1 has the following disadvantages. High amounts of halogens, particularly chlorides, are often introduced by the input material used in the gasification process, which ultimately become part of the Portland clinker and cement products. Further, ammonia is generated and leads to an increase of NOx emissions. Both these issues are problematic for the cement industry, as standards limit the amount of chlorides in Portland cements used in construction, and ammonia emissions are detrimental to the environment.

Therefore, the instant invention aims at providing an improved method of removing contaminants from syngas in order to make it suitable for being used as a fuel in the production of Portland clinker.

To solve this object, the invention provides a method of producing syngas from an input material, comprising gasifying the input material in a gasifier to obtain syngas and removing contaminants from the syngas, comprising a first wet scrubbing step for removing tar from the syngas and a second wet scrubbing step for removing ammonia from the syngas, wherein the first scrubbing step comprises feeding the syngas through a washing column of a first scrubber in the presence of a first washing liquid containing at least one, such as one or two, solvent and subjecting the first washing liquid to a separating step in a separator downstream of the washing column for separating tar from the first washing liquid, wherein a neutralizing agent is added to the first washing liquid in order to neutralize halogens contained in the syngas and obtain a sodium salt dissolving in the first washing liquid, i.e. in one of the solvents of the first washing liquids, and wherein a partial amount of ammonia contained in the syngas is precipitated into the first washing liquid and a remaining amount of ammonia contained in the syngas is removed from the syngas in the second wet scrubbing step.

Preferably, the halogen contained in the syngas is in the form of hydrogen halides and sodium hydroxide is used as the neutralizing agent, the resulting sodium salts being sodium fluoride, sodium chloride, sodium bromide or sodium iodide.

Thus, the invention provides an efficient way of removing halogens, in particular hydrogen chloride, from the syngas, thereby preventing the contamination of Portland clinker with such halogens when using the syngas as a fuel in a cement kiln.

In the first wet scrubbing step, halogens are removed from the syngas in the form of sodium salts that precipitate into one of the solvents in the first washing liquid and can be extracted from the process in the form of a brine.

As an unwanted byproduct, NH₃ (ammonia) is also partially precipitated into the solvent containing the salts. However, since ammonia constitutes an unwanted byproduct in the first wet scrubbing step and the dedicated step for removing ammonia is the second wet scrubbing step, it is desirable to remove the ammonia from that part of the first washing liquid. According to a preferred embodiment, this is accomplished by feeding the first washing liquid at least partially withdrawn from the separator containing ammonia and sodium salts through an evaporator, in which a partial amount of the washing liquid is evaporated to obtain steam loaded with ammonia, and a remaining amount of the first washing liquid containing the sodium salts is withdrawn from the evaporator in liquid form.

Ammonia is a volatile compound that can readily evaporate when heated, and it has a relatively high vapor pressure at room temperature. Therefore, if ammonia is present in the first washing liquid being evaporated, it can potentially vaporize and be carried along with the steam that is produced by the evaporator.

The concentration of ammonia in the steam may depend on various factors, such as the concentration of ammonia in the liquid as well as the temperature and pressure of the evaporator.

Further, it is desirable to recirculate the ammonia into the process, in order to maximize the amount of ammonia that can be removed from the syngas in the second wet scrubbing step. For this purpose, the steam loaded with ammonia is preferably introduced into the gasifier. The addition of steam into the gasifier has the effect of changing the composition of the syngas produced by the gasifier, by altering the gasification reactions and shifting the equilibrium of the gasification reactions. For example, the addition of steam can increase the production of hydrogen and carbon monoxide in the syngas, while decreasing the production of carbon dioxide. On the other hand, the addition of steam loaded with ammonia results in the accumulation of ammonia in the syngas.

It was found that the ph value of the first washing liquid in the first washing column influences the amount of ammonia contained in the steam produced by the evaporator. Preferably, the ph value of the first washing liquid withdrawn from the separator is adjusted to > 8. Ammonia exists in aqueous solutions in the form of ammonium ions (NH₄⁺) and ammonia gas (NH₃), with the relative proportion of each species depending on the pH of the solution. At lower pH values, more of the ammonia will exist in the ammonium ion form, which is less volatile and less likely to vaporize and be carried along with the steam. At higher pH values, more of the ammonia will exist in the ammonia gas form, which is more volatile and more likely to vaporize and be carried along with the steam.

Therefore, if the pH of the first washing liquid is relatively high, such as > 8, preferably > 9, more of the ammonia in the first washing liquid may exist in the ammonia gas form and be carried along with the steam produced by the evaporator.

The first and the second wet scrubbing step are carried out in a first scrubber and in second scrubber, respectively. The scrubbing step comprises feeding the syngas through a washing column of the scrubber in the presence of washing liquids. A typical configuration of the scrubbing step comprises feeding the syngas into the bottom of the washing column, which may be a tall cylindrical vessel packed with a material that provides a large surface area for contact between the syngas and the washing liquids. Washing liquids, typically water or a water-based solution or emulsion, is fed into the top of the column and flows downward over the packing material. As the syngas rises through the column, it comes into contact with the washing liquids and various chemical reactions and physical processes occur, depending on the specific contaminants being removed and the properties of the syngas and washing liquids. The contaminants are typically removed from the washing liquids in a separator downstream of the washing column using various treatment methods, such as decantation, chemical precipitation or filtration. The cleaned syngas exits the top of the washing column.

In the first wet scrubbing step, one or two solvents are used to constitute the first washing liquid in order to remove tar from the syngas. Tar can be removed from syngas by condensing it into a liquid or solid phase, wherein the solvent embodies the tar into the washing liquid so that a tar loaded first washing liquid is withdrawn from the washing column, which is subjected to a separating step in a separator. The separator is for separating tar and the first washing liquid itself, wherein the separator may preferably be designed as an oil/water separator.

Preferably, rapeseed methyl ester is used as one of the solvents. Rapeseed methyl ester (RME) has been found to have favorable solvent properties, including high solvency power, low toxicity, and biodegradability.

After having been freed from tar and other contaminants, the first washing liquid may be recirculated to the inlet of the first scrubber. For this purpose, the first scrubbing step preferably comprises circulating the first washing liquid in a first washing circuit, wherein said step of circulating the first washing liquid comprises feeding the first washing liquid into the first scrubber via an inlet, withdrawing a partial flow of the first washing liquid from the separator and recirculating the first washing liquid to the inlet.

Preferably, the step of recirculating the first washing liquid to the inlet comprises cooling the first washing liquid. This ensures that the temperature level required for the condensation of tar is reached.

In order to compensate for the loss of fluid caused by the withdrawal of part of the first washing liquid as sodium salt brine, fresh washing liquid or a component thereof, preferably water, is preferably added to the first washing circuit. Preferably, the neutralizing agent is added to the first washing liquid or the component thereof together with the fresh washing liquid.

Alternatively, fresh washing liquid or the component thereof may be added to the first washing liquid between the separator and the evaporator.

The sodium salt brine obtained by the first wet scrubbing step may be disposed of as industrial waste water and, e.g., discharged to a public treatment plant. In the case of using sodium hydroxide as the neutralizing agent, the brine contains NaOH⁺ ions, NH₄⁺ ions and halogen- ions, e.g. Cl⁻ ions. Further, the brine may contain contaminants, such as HgS and PAH, which may preferably be removed from the brine before being discharged.

PAH stands for polycyclic aromatic hydrocarbons, which are a group of organic compounds that contain two or more fused aromatic rings. PAHs can be produced as byproducts of incomplete combustion, and are often found in the condensate of syngas scrubbers as a result of their presence in the syngas feedstock. PAHs are considered to be environmental pollutants and potential human health hazards due to their toxicity and carcinogenic properties. They can be persistent in the environment and can accumulate in soils, sediments, and living organisms, including humans. PAHs may preferably be removed from the brine by means of filtration.

HgS (mercury sulfide) deposits can potentially occur in the condensate of a syngas scrubber, because mercury is often present in syngas as a trace impurity. During the scrubbing process, mercury in the syngas may form a solid compound, typically HgS, which can accumulate in various parts of the scrubber, including the condensate. In the condensate, the HgS deposits can form as a result of the reaction between dissolved mercury and sulfur compounds in the condensate, such as sulfates or sulfites. HgS may preferably be removed from the brine by means of filtration.

Turning now to the second scrubbing step, a preferred embodiment provides that it comprises circulating a second washing liquid in a second washing circuit, wherein said step of circulating the second washing liquid comprises feeding the second washing liquid into a second scrubber via an inlet, precipitating ammonia into the second washing liquid, withdrawing the second washing loaded with ammonia from the second scrubber and recirculating the second washing liquid to the inlet, wherein a partial flow of the second washing liquid loaded with ammonia is branched off from the second washing circuit via a junction and fresh washing liquid is added to the second washing liquid downstream of the junction.

Preferably, the second scrubbing step comprises adding H₂SO₄ to the second washing liquid and withdrawing the second washing liquid containing ammonia sulfate from the second scrubber. Adding sulfuric acid can be useful in a scrubber for separating ammonia from syngas for the following reason. Ammonia is a basic gas, and it can be reacted with sulfuric acid to form ammonium sulfate, which is a salt that can be easily dissolved in and thus extracted with the washing liquid. This reaction can be written as:

2NH₃ + H₂SO₄ → (NH₄)² SO₄

dissolved in water as NH₄⁺ and SO₄²⁻

By adding sulfuric acid to the scrubber, the ammonia in the syngas can be converted into a salt that can be easily removed, which can help improve the efficiency of the separation process.

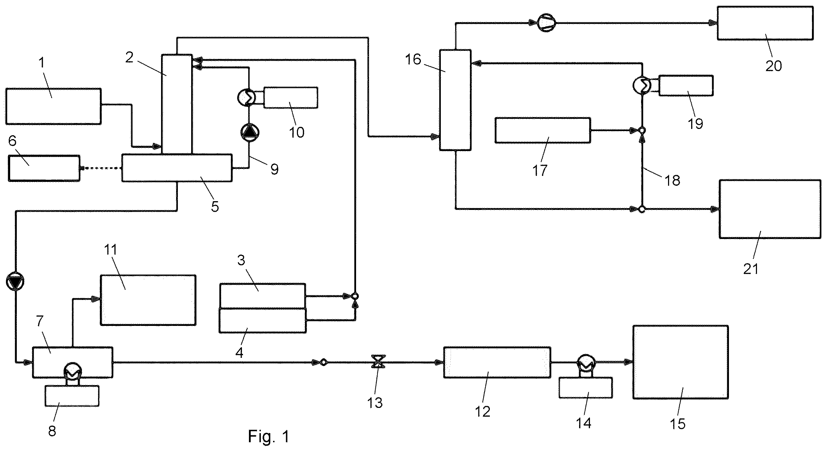

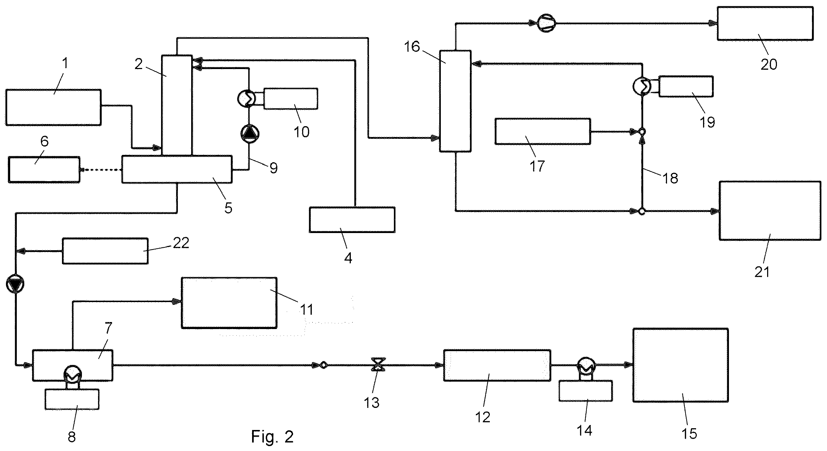

In the following, the invention is described in more detail with reference to exemplary embodiments shown in the figures. Therein, Fig. 1 shows a bock diagram of a first embodiment of the method of the invention and Fig. 2 shows a bock diagram of a second embodiment of the method of the invention.

In Fig. 1 syngas 1 is led through a washing column of a first scrubber 2 by feeding the syngas into the bottom of the washing column containing a packing material, in which the syngas is contacted with a first washing liquid. The first washing liquid is a water-based solution containing RME, which is fed into the top of the washing column and flows downward over the packing material. Further, fresh water 3 together with sodium hydroxide 4 is fed into the washing column of the first scrubber 2. The sodium hydroxide 5 acts as a neutralizing agent, which results in that hydrogen halides contained in the syngas react with the neutralizing agent to obtain inorganic sodium salts that are dissolved in the first washing liquid. As the syngas rises through the column, tar and water vapor contained in the syngas condense into the first washing liquid and contaminants, including ammonia, PAHs and HgS dissolve and/or precipitate into the first washing liquid, which is collected in an oil/water separator 5. In the separator 5 tar is separated from the first washing liquid and removed as a tar emulsion 6.

A partial amount of the first washing liquid is removed from the separator 5 as an aqueous stream and fed into an evaporator 7, the heat input of which is denoted by 8. The remaining amount of the first washing liquid is recirculated into the washing column of the first scrubber 2 via a recirculation line 9, which comprises a cooler 10, in order to cool the washing liquid before being introduced into the first scrubber 2. The evaporator 7 serves to produce wet steam and to remove ammonia from the aqueous stream. If the pH value of the aqueous stream is above 8, a substantial part of the ammonia contained in the aqueous stream will be released from the evaporator 7 in the steam 11. The steam 11 loaded with ammonia may be introduced into the gasifier (not shown), in which the syngas 1 is produced. The remaining amount of the aqueous stream is now a concentrated brine containing the sodium salts and is withdrawn from the evaporator 7 in liquid form and fed to a filter 12 after relieving the pressure at 13. The treatment step 12 serves to remove HgS and PAHs from the brine. After a cooling step in a cooler 14, the final brine 15 is collected in the form of water containing NaOH⁺ ions, NH₄⁺ ions, F⁻ ions, Br⁻ ions, I⁻ ions and Cl⁻ ions.

The partly purified syngas is withdrawn from the top of the first scrubber 2 and is fed through a second scrubber 16, in which ammonia is removed from the syngas. Water 17 is used as the second washing liquid in the second scrubber 16. Optionally, H₂SO₄ may be added to the second washing liquid, in order to improve the efficiency of the process of separating ammonia from the syngas.

The second washing liquid that is removed from the second scrubber 16 is recirculated to the washing liquid inlet of the second scrubber 16 via the recirculation line 18, after having been cooled in a cooler 19. Maximizing the cooling of the recirculated second washing liquid will improve the capturing of ammonia and result in a particularly dry syngas 20. The remaining amount of the second washing liquid that is not recirculated is collected at 21 in the form of water containing up to 20-25 vol.-% ammonia. In case H₂SO₄ is added to the second washing liquid, ammonia sulfate is obtained. The extracted ammonia solution may subsequently be used as reagent for the reduction of NOx emissions of the cement production line.

Fig. 2 shows a process which largely corresponds to the process illustrated in Fig. 1, except that fresh water is added to the process at 22, i.e. to the brine upstream of the evaporator 7, instead of being added to the input of the first scrubber 2.

## Claims

1. A method of producing syngas from an input material, comprising gasifying the input material in a gasifier to obtain syngas and removing contaminants from the syngas, comprising a first wet scrubbing step for removing tar from the syngas and a second wet scrubbing step for removing ammonia from the syngas, wherein the first scrubbing step comprises feeding the syngas through a washing column of a first scrubber (2) in the presence of a first washing liquid containing at least one solvent and subjecting the first washing liquid to a separating step in a separator (5) downstream of the washing column for separating tar from the first washing liquid, wherein a neutralizing agent (4) is added to the first washing liquid in order to neutralize halogens contained in the syngas and obtain a sodium salt dissolving in the first washing liquid, and wherein a partial amount of ammonia contained in the syngas is precipitated into the first washing liquid and a remaining amount of ammonia contained in the syngas is removed from the syngas in the second wet scrubbing step.

2. Method according to claim 1, wherein the halogens are present as hydrogen halides and sodium hydroxide is used as the neutralizing agent (4).

3. Method according to claim 1 or 2, wherein rapeseed methyl ester and water are used as the solvents of the first washing liquid.

4. Method according to claim 1, 2 or 3, wherein the first washing liquid, containing ammonia and sodium salts, is at least partially withdrawn from the separator (7) and is fed through an evaporator (7), in which a partial amount of the washing liquid is evaporated to obtain steam (11) loaded with ammonia, and a remaining amount of the first washing liquid containing the sodium salts is withdrawn from the evaporator (7) in liquid form.

5. Method according to claim 4, wherein the steam loaded with ammonia is introduced into the gasifier.

6. Method according to any one of claims 1 to 5, wherein the ph value of the first washing liquid withdrawn from the separator (7) is adjusted to > 8.

7. Method according to any one of claims 1 to 6, wherein the first scrubbing step comprises circulating the first washing liquid in a first washing circuit, wherein said step of circulating the first washing liquid comprises feeding the first washing liquid into the first scrubber (2) via an inlet, withdrawing a partial flow of the first washing liquid from the separator (5) and recirculating the first washing liquid to the inlet.

8. Method according to claim 7, wherein the step of recirculating the first washing liquid to the inlet comprises cooling the first washing liquid.

9. Method according to claim 7 or 8, wherein fresh washing liquid or a component thereof, preferably water, is added to the first washing circuit.

10. Method according to claim 9, wherein the neutralizing agent (4) is added to the first washing liquid together with the fresh washing liquid (3) or the component thereof.

11. Method according to any one of claims 1 to 8, wherein fresh washing liquid (22) or a component thereof, preferably water, is added to the first washing liquid between the separator (5) and the evaporator (7).

12. Method according to any one of claims 1 to 11, wherein the second scrubbing step comprises circulating a second washing liquid in a second washing circuit, wherein said step of circulating the second washing liquid comprises feeding the second washing liquid into a second scrubber (16) via an inlet, precipitating ammonia into the second washing liquid, withdrawing the second washing loaded with ammonia from the second scrubber (16) and recirculating the second washing liquid to the inlet, wherein a partial flow of the second washing liquid loaded with ammonia is branched off from the second washing circuit via a junction and fresh washing liquid (17) or a component thereof is added to the second washing liquid downstream of the junction.

13. Method according to any one of claims 1 to 12, wherein the second scrubbing step comprises adding H₂SO₄ to the second washing liquid and withdrawing the second washing liquid containing ammonia sulfate from the second scrubber (16).

14. Method according to any one of claims 1 to 13, wherein water is used as a component of said first washing liquid and/or said second washing liquid.

15. Method according to any one of claims 12 to 14, wherein the second washing liquid loaded with ammonia is used for the reduction of NOx emissions of a cement production line.
